(19) Europäisches Patentamt
European Patent Office
Office européen des brevets

(11) Publication number: **0 094 796**
**B1**

(12) **EUROPEAN PATENT SPECIFICATION**

(45) Date of publication of patent specification: **10.10.90**

(51) Int. Cl.[5]: **A 01 M 7/00,** B 05 B 3/10, B 05 B 5/04

(21) Application number: **83302698.2**

(22) Date of filing: **12.05.83**

(54) **Spraying.**

(30) Priority: **13.05.82 GB 8213972**

(43) Date of publication of application: **23.11.83 Bulletin 83/47**

(45) Publication of the grant of the patent: **10.10.90 Bulletin 90/41**

(84) Designated Contracting States: **DE FR GB IT**

(56) References cited:
**DE-A-2 510 239**
**DE-B-1 109 062**
**DE-C- 912 637**
**FR-A-1 360 193**
**GB-A- 725 083**

(73) Proprietor: **NATIONAL RESEARCH DEVELOPMENT CORPORATION**
**101 Newington Causeway**
**London SE1 6BU (GB)**

(72) Inventor: **Arnold, Arthur John**
**Raventor Lydford**
**Okehampton Devon (GB)**

(74) Representative: **Chandler, Derek Richard**
**Patent Department National Research Development Corporation 101 Newington Causeway**
**London SE1 6BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 094 796 B1

## Description

This invention relates to apparatus for spraying liquids.

When growing crops, either in the open or under cover such as a greenhouse, it is often necessary to apply substances, usually carried as or in a liquid, to the crops and their environment, for example to control pests or diseases. For economy and safety it is important that as much as possible of the substance sprayed reaches its target and does not get blown away to land elsewhere. Accordingly control of flow of liquid to a sprayer and the form of spray produced are significant problems in the technology.

It is an object of the invention to provide an improved spraying apparatus.

According to the invention there is provided a sprayer for agricultural treatment liquids including a spray cup of conical form supported at the narrow end to be rotated on the axis of the conical form to disperse into droplets sprayed from the cup mouth forwardly of the conical form a liquid supplied to the cup, a liquid supply means extending through the support for the cup from a liquid receiving means to supply said liquid to means to distribute liquid to the cup, the means to distribute liquid having a single inwardly directed open surface over which the liquid can flow without interruption supported from the inside of the cup to move with the cup and distribute liquid evenly to the inside of the cup and a liquid feed spaced from the surface to discharge liquid freely from an outlet without deflection from said axis of the cup onto the centre of the inward surface of the distributor characterised in that there are means to apply an electrostatic potential including a charging electrode spaced rearwardly of the distributor and an electrically conductive region not connected to the means to apply an electrostatic potential extending forwardly of the distributor, the liquid supply means including a metering pump, and the single open surface being planar.

The support of the distribution surface may leave a small gap at the region of the spray forming means for the passage of liquid.

The liquid supply arrangement may have a discharge orifice which is loosely engageable with the means to receive liquid for spraying. The metering pump may be of adjustable delivery rate, for example of adjustable speed or stroke and may be a peristaltic pump.

The spray forming means may be rotated by a belt drive on an external surface of the spray forming means. The spray forming means may be arranged for rotation at different speeds which may be discrete or variable over a range.

The arrangement is particularly suitable for spray rates in excess of 10 millilitres per minute (ml/min).

The electrodes may include one or more point electrodes within the spray forming means for energisation from a source of electrostatic potential via the supply means and one or more surface electrodes inside the spray forming means. The point electrode or electrodes may be at or near the axis about which the spray forming means rotates.

Conveniently a surface electrode is provided on the inside surface of the conical form and extending to the open, larger end and a surface electrode on the inward surface of the distributor. The surface electrodes need not be connected to the electrostatic supply.

The application of agricultural chemicals raises special problems relating to precision of deposit of material both in terms of quantity and position. It is also essential that devices for agricultural use are robust and simple both for reduction of initial cost and ease of use in field conditions. The use of an electrostatically charged spray of droplets meets the requirements for precision of application but a simple robust sprayer is needed.

DE-C-912 637 shows a sprayer for agricultural use, specifically for shrubs and trees. The sprayer includes a sprayhead mounted in a duct through which air is blown. The airstream has two purposes. It assists the movement of the spray and drives the sprayhead to disperse supplied liquid as spray droplets which are then carried along in the air stream. In one arrangement the spray liquid is applied at the centre of a deeply-curved concave surface which is rotated by the drive of the air blast to spread the liquid into a similarly rotated conical duct from which the spray droplets are dispersed to be taken up by the air stream. Whatever the pattern of dispersion achieved by the rotating conical duct will not be maintained when the droplets enter the air stream. There is not any suggestion of uniformity of the eventual spray pattern. The sprayer as a whole requires an air blast produced by an associated compressor and internal combustion engine to carry the spray to the plants, the droplets do not reach the plants without this assistance.

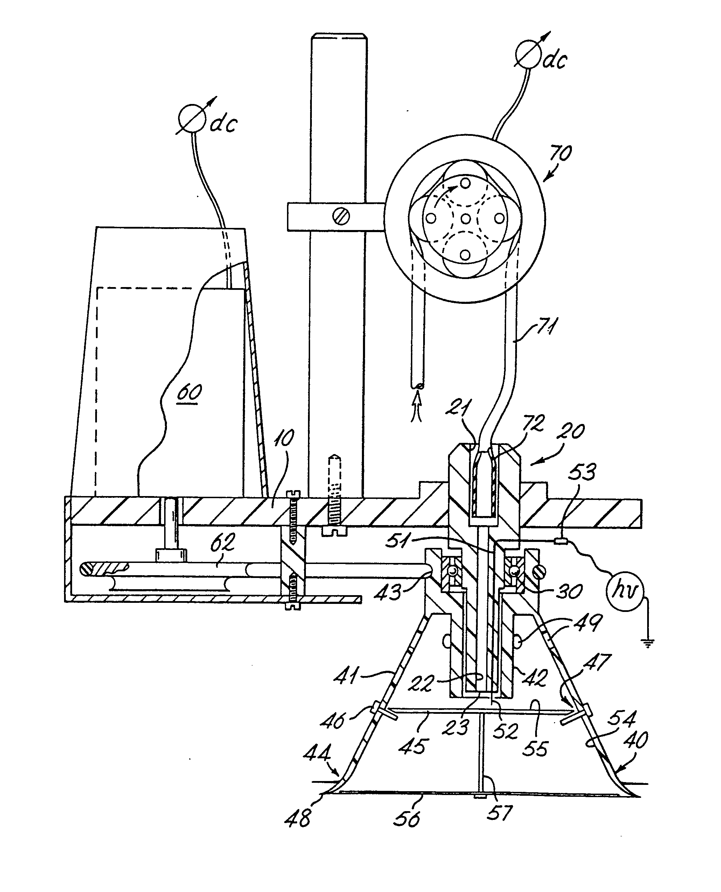

Embodiments of the invention will now be described with reference to the accompanying drawing which shows a cross-section through an electrostatic spray head arrangement embodying the invention together with exemplary associated equipment.

The spray head arrangement is supported on a mounting plate 10 to which other items of equipment can be secured and by which the spray head can be directed as required. A support member 20 is secured into the mounting plate in any convenient way and arranged to provide three main elements of the arrangement. These are as follows: a liquid receiver, a liquid feed and a support on which a spray forming means 40 can rotate, and are detailed below. The spray forming means, in the illustrated embodiment, is based on a hollow conical structure 41 which is open at the larger end and engages the support member, via a bearing 30, at the smaller end. Conveniently a central extension of the smaller end of the cone, 42, surrounds an extension 21 of the support member 20, on which the bearing 30 is secured. The extension 21 forms the liquid feed and, if required, houses an electrical connection 51. The spray forming means is driven in any appropriate manner to revolve on support 20 at a speed to disperse liquid from the open end 44 in spray form. For example a groove 43 may receive a rubber drive band 61. An electric motor 60 provided with a pulley 62, which may be stepped, is arranged to drive the spray forming means 40. The speed can be adjusted by means of a step-pulley or by altering the motor speed, or both. The structure 40 may be stepped to permit speed alteration or the conical surface may be used. Typical speeds for the means 40 are 2,500 rpm and 5,000 rpm. Higher speeds may be used; if necessary the size of the head may be reduced for higher speeds.

Liquid can be supplied to the arrangement by metering pump 70, so that the flow of liquid is controllable and adjustable. Liquid from the supply is supplied to a liquid receiver 21 in support member 20. The supply is via conduit 71 which leads to a discharge outlet 72. Outlet 72 can be held loosely in receiver 21, e.g. by being a push-fit. so that it can be removed during use to check and measure the flow rate e.g. by allowing the liquid to flow into a measuring cylinder. By this arrangement the rate of flow is set by the pump action, which is controllable by adjusting speed and/or stroke, and no fine jets are required, e.g. to control flow, avoiding the risk of blockage. The outlet 72 can be secured to prevent it falling out, e.g. by a spring clip "O" ring or other means, while permitting easy removal by an operator. No dismantling is needed as is often the case with jet-controlled devices. A peristaltic pump, as shown, is particularly suitable as the construction is robust and speed variation gives a simple control of flow-rate.

Liquid from the receiver passes down channel 22 which forms the liquid feed. This channel is of any convenient bore as it does not have to control the flow of liquid but can serve to make the flow steady. The outlet 23 of channel 22 is preferably on the axis of rotation of spray forming means 40, for reasons given below. Conveniently, channel 22 is also on this axis but this is not so important as the position of the outlet 23.

In spray forming means 40 a liquid distributor 45 is provided. In the illustrated embodiment this is a sharp-edged disc supported across the hollow structure 41, for example by three or more set screws such as 46. The disc is arranged not to close-off the interior of the structure 41 leaving a gap 47 so that liquid from outlet 23 can spread over the surface of disc 45, pass through the gap 47 and be discharged from the open end 44 as a spray. The outlet 23 is arranged to be close to the surface of disc 45 so that liquid is reliably transferred to the disc whatever the angle or motion of the head.

The distributor 45 is arranged to move round with or by the rotation of structure 40. (For example there need not be a connection between the distributor 45 and structure 40; instead the distributor 45 could be supported in another way and "entrained" by the rotation of structure 40). By this movement the liquid coming from outlet 23, usually in a continuous stream, is distributed evenly over the disc 45 and thus applied evenly to the inside of structure 40. The form of support shown for disc 45 must cause some interruption of the even spread but this can be minimised in practice and does not impair the spray forming action. The rotation of structure 40 causes the liquid passing through gap 47 to move over the inside of the core to the open end where it is discharged as a spray from the lip 48.

The liquid feed rate and spin speed of the cone are adjustable to meet required spray forms, in terms of droplet size and speed and application rate as will be readily apparent to those skilled in the art so these matters are not described further. However, by way of indication of capacity a conical spray forming means some 10 cm across at the open end can be driven, at the higher speed above, to discharge at least 500 ml/min of liquid as spray and can be easily altered in speed and delivery to discharge 25 ml/min or less, say 10 ml/min, as spray at the lower speed. Holes such as 49 can be provided in structure 41 to entrain air and assist in the atomization and distribution of the liquid.

For charged spraying attention must be paid to the electrical performance of the materials used in the structure. The structure is very suitable for electrostatic use as a very short and simple electrical supply path can be provided, which is important for electrostatic potentials to prevent undue loss of electrical energy as well as danger to operators.

Accordingly support member 20 is made of a mechanically strong insulating material, such as plastics material sold under the Registered Trade Mark NYLON. This member provides an insulating support for a high voltage electrical connection 53 and an electrical supply 51 to an electrode 52. The position of electrode 52 may be as shown or the electrode may be extended to be nearer the edge of distributor 45. The electrode 52 is spaced a suitable distance from surface 55 of distributor 45.

Surface 55, or even the whole of disc 45, can be of a conducting material e.g. a metal foil or a metal sheet. The inside surface of structure 40 is also arranged to provide a conductive surface 54 which extends to lip 48. Lip 48 can be serrated or otherwise formed to encourage spray droplet formation. Screws 46 are conveniently of insulating material in this embodiment. The conductive surface 54 must extend at least past the position of gap 47.

In place of the conductive surface 54 a light conductive disc or an array of ionising wires 56 may be used at the open end 44 of the spray forming means. The disc or array is held in position by a support means such as rod 57 which can also provide an electrical connection if required. The disc or array may extend beyond lip 48 if needed. The conductive surfaces such as 54, 55, do not need electrical connection to the electrostatic supply.

As in operation the spray head is positioned with the open end of structure 40 downwards and the liquid feed path 22 generally vertical to the smaller diameter, part of structure 40 is generally dry inside and the whole outside is reasonably free of liquid so that electrical conditions are not too severe.

When operated to provide a charged spray a liquid feed rate of at least 10 ml/min is possible. The pump 70, and motor 60, can be supplied from a 12v supply at moderate current drain, say 2A, and a high voltage supply of some 30KV at a drain of some 5 microamps is appropriate.

The arrangement described provides a versatile spray head suitable for charged and uncharged sprays at a wide range of delivery rates which are readily controlled and supervised in field use. Fine jets are avoided reducing the risk of blockage. Speed and delivery can be adjusted to suit insecticides and herbicides for indoor and outdoor use. When the spray head is carried, e.g. by a land vehicle or aeroplane, at high speed over the target, suitably high discharge rate is possible. The construction exemplified by the embodiments described reduces the wetting of the arrangement in use, so easing insulation problems. The construction is of a simple form reducing initial costs and maintenance and is easy to clean and calibrate. A uniform spray is assisted by the liquid dispersion technique in the spray head.

Other forms of drive, mounting and liquid supply are possible as will be apparent and the exact form of construction and materials as well as the bearing used to support the spray forming means can be adjusted to suit particular needs. as will be apparent to those skilled in the art.

## Claims

1. A sprayer for agricultural treatment liquids including a spray cup (41) of conical form supported at the narrow end to be rotated on the axis of the conical form to disperse into droplets sprayed from the cup mouth (44) forwardly of the conical form a liquid supplied to the cup, a liquid supply means (22) extending through the support for the cup from a liquid receiving means (21) to supply said liquid to means (45) to distribute liquid to the cup, the means (45) to distribute liquid having a single inwardly directed open surface (55) over which the liquid can flow without interruption supported (46) from the inside of the cup (41) to move with the cup and distribute liquid evenly to the inside of the cup and a liquid feed (21) spaced from the surface (55) to discharge liquid freely from an outlet (23) without deflection from said axis of the cup onto the centre of the inward surface (55) of the distributor characterised in that there are means to apply an electrostatic potential including a charging electrode (52) spaced rearwardly of the distributor and an electrically conductive region (54) not connected to the means to apply an electrostatic potential extending forwardly of the distributor, the liquid supply means including a metering pump, and the single open surface being planar.

2. An arrangement according to Claim 1 in which said liquid distribution surface is separated from the spray forming means by a small peripheral gap (47) for the passage of liquid to said spray forming means.

3. An arrangement according to Claim 1 in which the metering pump has a discharge orifice (72) which is loosely engageable with said liquid receiving means (21).

4. An arrangement according to Claim 1 in which the spray forming means includes means (43) on an external surface to receive drive to rotate the spray forming means.

5. An arrangement according to Claim 1 in which the charging electrode (52) is a point electrode.

6. An arrangement according to Claim 1 including a surface electrode on the inward surface of the distributor (55).

7. An arrangement according to Claim 1 in which the electrically conductive region is a surface electrode (54) on the inside surface of the spray cup.

8. An arrangement according to Claim 1 in which the electrically conductive region is a disc or wire array (56) at the open end of the spray cup.

9. An arrangement according to Claim 1 in which the metering pump is a peristaltic pump to deliver liquid to the liquid feed means at a rate variable from 10 ml/ min to 500 ml/min.

## Patentansprüche

1. Sprühvorrichtung zum versprühen von landwirtschaftlichen Behandlungsflüssigkeiten,

mit einem Sprühbecher (41) in Form eines Kegels, der an seinem verjüngten Ende drehbar gelagert ist, so daß er um die Kegelachse rotieren kann, wobei er eine dem Sprühbecher zugeführte Flüssigkeit in Tropfen dispergiert, die von der Bechermündung (44) nach vorn aus dem Kegel versprüht werden,

mit einer Einrichtung (22) zur Flüssigkeitszufuhr, die von einer Flüssigkeits-Aufnahmevorrichtung (21) durch das Lager des Sprühbechers verläuft, um die Flüssigkeit einem Flüssigkeits-Verteiler (45) für das Verteilen der Flüssigkeit auf den Sprühbecher zuzuführen, wobei dieser Flüssigkeits-Verteiler (45) eine einzige nach innen gerichtete öffene Fläche (55) besitzt, über die die Flüssigkeit unterbrechungsfrei fließen kann und die von der Innenseite des Sprühbechers (41) so gehalten wird, daß sie sich mit dem Sprühbecher bewegt und Flüssigkeit gleichförmig auf der Innenseite des Sprühbechers verteilt,

sowie mit einer im Abstand von der genannten Fläche (55) angeordneten Flüssigkeits-Einspeisung (21), die Flüssigkeit ohne Ablenkung gegenüber der Achse des Sprühbechers auf das Zentrum der innenseitigen Fläche (55) des Flüssigkeits-Verteilers abgibt,

dadurch gekennzeichnet,

daß Mittel zum Anlegen eines elektrostatischen Potentials vorgesehen sind, die eine im Abstand hinter dem verteiler angeordnete Ladeelektrode (5z) umfassen sowie einen elektrisch leitfähigen Bereich (54), der mit den Mitteln zum Anlegen des elektrostatischen Potentials nicht verbunden ist und sich vor dem verteiler erstreckt,

daß die Einrichtung zur Flüssigkeitszufuhr eine Dosierpumpe enthält,

und daß die einzige offene Fläche (55) eben ist.

2. Vorrichtung nach Anspruch 1, in der die Flüssigkeits-Verteilungsfläche von den die Sprühvorrichtung bildenden Mitteln durch einen schmalen umlaufenden Spalt (47) für den Durchtritt der Flüssigkeit zu den den Sprühstrahl bildenden Mitteln getrennt ist.

3. Vorrichtung nach Anspruch 1, in der die Dosierpumpe eine Auslaßöffnung (72) besitzt, die mit der Flüssigkeits-Einspeisung (21) lose verbindbar ist.

4. Vorrichtung nach Anspruch 1, in der die den Sprühstrahl bildenden Mittel auf einer Außenfläche Mittel (43) aufweisen, die Antriebsleistung zum Drehen der den Sprühstrahl bildenden Mittel aufnehmen.

5. Vorrichtung nach Anspruch 1, in der die Ladeelektrode (52) eine Punktelektrode ist.

6. Vorrichtung nach Anspruch 1, mit einer Flächenelektrode auf der Innenseite des Verteilers (55).

7. Vorrichtung nach Anspruch 1, in der der elektrisch leitfähige Bereich eine Flächenelektrode (54) auf der Innenseite des Sprühbechers ist.

8. Vorrichtung nach Anspruch 1, in der der elektrisch leitfähige Bereich eine Scheibe oder eine regelmäßige Drahtanordnung (56) an dem offenen Ende des Sprühbechers ist.

9. Vorrichtung nach Anspruch 1, in der die Dosierpumpe eine peristaltische Pumpe ist, die der Flüssigkeits-Einspeisung Flüssigkeit mit einer von 10 ml/min bis 500 ml/min veränderbaren Menge zuführt.

**Revendications**

1. Pulvérisateur pour liquides de traitement agricole comprenant une coupelle de pulvérisation (41) de forme conique soutenue par l'extrémité étroite pour être entraînée en rotation sur l'axe du cône afin de disperser en gouttelettes pulvérisées depuis l'ouverture (44) de la coupelle et en avant de la forme conique, un liquide distribué à la coupelle, des moyens (22) d'alimentation en liquide s'étendant à travers le support de la coupelle à partir d'un dispositif récepteur de liquide (21) pour distribuer ce liquide à des moyens (45) de répartition du liquide sur la coupelle, les moyens (45) pour répartir le liquide ayant une surface ouverte unique (55) dirigée vers l'intérieur sur laquelle le liquide peut s'écouler sans interruption, soutenue par des moyens (46) depuis l'intérieur de la coupelle (41) pour se déplacer avec celle-ci et répartir le liquide uniformément à l'intérieur de la coupelle, et une alimentation en liquide (21) espacée de la surface (55) pour distribuer librement du liquide par un orifice (23) sans déviation par rapport audit axe de la coupelle sur le centre de la surface intérieure (55) du répartiteur, pulvérisateur caractérisé en ce qu'il est prévu des moyens pour appliquer un potentiel électrostatique, comprenant une électrode de charge (52) espacée vers l'arrière du répartiteur et une région (54) électriquement conductrice, qui n'est pas reliée aux moyens pour appliquer un potentiel électrostatique, s'étendant vers l'avant du distributeur, les moyens d'alimentation en liquide comprenant une pompe de dosage, et ladit surface ouverte unique étant plane.

2. Disposition suivant la revendication 1, dans lequel la surface de répartition du liquide est séparée du dispositif de pulvérisation par un petit intervalle périphérique (47) pour le passage du liquide vers le dispositif de pulvérisation.

3. Disposition suivant la revendication 1, dans lequel la pompe de dosage comporte un orifice de sortie (72) qui peut venir en contact librement avec le dispositif récepteur de liquide (21).

4. Disposition suivant la revendication 1, dans lequel le dispositif de pulvérisation comprend des moyens (43) sur une surface externe pour recevoir un entraînement pour entraîner le dispositif de pulvérisation en rotation.

5. Disposition suivant la revendication 1, dans lequel l'électrode de charge (52) est une électrode pointue.

6. Disposition suivant la revendication 1, comprenant une surface formant électrode sur la surface intérieure du distributeur (55).

7. Disposition suivant la revendication 1, dans lequel la région électriquement conductrice est une surface (54) formant électrode sur la surface interne de la coupelle de pulvérisation.

8. Disposition suivant la revendication 1, dans lequel la région électriquement conductrice est un disque ou un réseau de fil métallique (56) à l'extrémité ouverte de la coupelle de pulvérisation.

9. Disposition suivant la revendication 1, dans lequel la pompe de dosage est une pompe péristaltique pour distribuer un liquide aux moyens d'alimentation en liquide av ec un débit variable de 10 ml/min à 500 ml/min.s

dc
dc
70
71
60
10
21
72
20
53
62
51
43
30
hv
49
41
42
47
22
46
23
52
55
54
45
40
44
48
56
57